# EUROPEAN PATENT APPLICATION

(11) **EP 4 542 420 A1**
(43) Date of publication of application: **23.04.2025**
(21) Application number: 23822891.0
(22) Date of filing: 23.05.2023
(51) Int. Cl.: G06F 16/735

(54) **RECOMMENDATION METHOD AND APPARATUS, AND DEVICE, STORAGE MEDIUM AND COMPUTER PROGRAM PRODUCT**

(30) Priority: 15.06.2022 CN 202210681804
(71) Applicant: BEIJING YOUZHUJU NETWORK TECHNOLOGY CO. LTD., Beijing 101299 (CN)
(72) Inventor: NIU, Huizhen, Beijing 100028 (CN)
(74) Representative: Dentons UK and Middle East LLP
(86) International application number: PCT/CN2023/095873
(87) International publication number: WO 2023/241321

(57) **Abstract**

Provided in the embodiments of the present disclosure are a recommendation method and apparatus, and a device, a storage medium and a computer program product. The method comprises: in response to a screenshot operation for a video stream page, acquiring a video screenshot image; if the acquired video screenshot image meets a preset condition, presenting the video screenshot image and an object recommendation control on the video stream page, wherein the preset condition is that the object type of a target object in the video screenshot image is a preset type; and, in response to a first trigger operation for the object recommendation control, presenting a recommendation result page on the video stream page, wherein the recommendation result page comprises attribute information of a recommendation object corresponding to the target object.

## Description

### CROSS-REFERENCE TO RELATED APPLICATION

The present application claims priority to Chinese Patent Application No. 202210681804.7, filed with the China Patent Office on June 15, 2022 and entitled "RECOMMENDATION METHOD AND APPARATUS, AND DEVICE, STORAGE MEDIUM, AND COMPUTER PROGRAM PRODUCT", which is incorporated herein by reference in its entirety.

### TECHNICAL FIELD

Embodiments of the present disclosure relate to the field of computer technologies, and in particular, to a recommendation method and apparatus, a device, a storage medium, and a computer program product.

### BACKGROUND

When a user views a video on a terminal device, the user may be interested in one or some objects in the video. For example, the objects may be commodities or the like. Taking a commodity as an example, if there is no details link of the commodity in the video on a playing interface of the video, the user can search for information by entering keywords on one or some e-commerce pages when the user wants to find the commodity presented in the video. Then, search results are presented to the user, such as details links of similar commodities. The user can view the similar commodities by filtering the provided search results and clicking on the details links.

However, when the user needs to search for a commodity, but the user may not know the name of the commodity or the keyword entered by the user does not match the commodity, the conventional method of keyword searching and sorted presentation as described above may not allow the user to quickly find commodity information meeting their requirement. In addition, the user needs to open an e-commerce application, enter a keyword, search, and so on, and the operation steps are complex.

Therefore, the recommendation method provided in the prior art has complex operation steps, and cannot allow a recommended object required by the user to be quickly found, thereby affecting the user experience.

### SUMMARY

Embodiments of the present disclosure provide a recommendation method and apparatus, a device, a storage medium, and a computer program product, which make it possible to quickly find a recommended object required by a user with simple operation steps.

According to a first aspect, an embodiment of the present disclosure provides a recommendation method. The method includes:
obtaining a video screenshot image in response to a screenshot operation on a video stream page;
presenting, if the obtained video screenshot image meets a preset condition, the video screenshot image and an object recommendation control on the video stream page, where the preset condition is that an object type of a target object in the video screenshot image is a preset type; and
presenting, in response to a first trigger operation for the object recommendation control, a recommendation result page on the video stream page, where the recommendation result page includes attribute information of a recommended object corresponding to the target object.

According to a second aspect, an embodiment of the present disclosure provides a recommendation apparatus. The apparatus includes:
an obtaining module configured to obtain a video screenshot image in response to a screenshot operation on a video stream page;
a first display module configured to present, when the obtained video screenshot image meets a preset condition, the video screenshot image and an object recommendation control on the video stream page, where the preset condition is that an object type of a target object in the video screenshot image is a preset type; and
a second display module configured to present, in response to a first trigger operation for the object recommendation control, a recommendation result page on the video stream page, where the recommendation result page includes attribute information of a recommended object corresponding to the target object.

According to a third aspect, an embodiment of the present disclosure provides an electronic device. The electronic device includes: a processor and a memory,
where the memory stores computer-executable instructions; and
the processor executes the computer-executable instructions stored in the memory, to cause the processor to perform the recommendation method according to the first aspect.

According to a fourth aspect, an embodiment of the present disclosure provides a computer-readable storage medium storing computer-executable instructions that, when executed by a processor, cause the recommendation method according to the first aspect to be implemented. According to a fifth aspect, an embodiment of the present disclosure provides a computer program product including a computer program that, when executed by a processor, causes the recommendation method according to the first aspect to be implemented.

According to a sixth aspect, an embodiment of the present disclosure provides a computer program that, when executed by a processor, causes the recommendation method according to the first aspect to be implemented.

### BRIEF DESCRIPTION OF DRAWINGS

In order to more clearly describe the technical solutions in the embodiments of the present disclosure or in the prior art, the accompanying drawings for describing the embodiments or the prior art will be briefly described below. Apparently, the accompanying drawings in the description below show some embodiments of the present disclosure, and persons of ordinary skill in the art may still derive other accompanying drawings from these accompanying drawings without creative efforts.
Fig. 1A is a schematic diagram of a scenario of a recommendation method according to an embodiment of the present disclosure;
Fig. 1B is a schematic diagram of a scenario of a recommendation method according to another embodiment of the present disclosure;
Fig. 2 is a schematic flowchart of a recommendation method according to an embodiment of the present disclosure;
Fig. 3 is a schematic diagram of a scenario of a recommendation method according to still another embodiment of the present disclosure;
Fig. 4 is a schematic diagram of a scenario of a recommendation method according to another embodiment of the present disclosure;
Fig. 5 is a schematic diagram of a scenario of a recommendation method according to still another embodiment of the present disclosure;
Fig. 6 is a schematic diagram of a scenario of a recommendation method according to yet another embodiment of the present disclosure;
Fig. 7 is a schematic diagram of a scenario of a recommendation method according to still yet another embodiment of the present disclosure;
Fig. 8 is a schematic diagram of a scenario of a recommendation method according to another embodiment of the present disclosure;
Fig. 9 is a schematic diagram of a scenario of a recommendation method according to still another embodiment of the present disclosure;
Fig. 10 is a schematic diagram of a scenario of a recommendation method according to yet another embodiment of the present disclosure;
Fig. 11 is a schematic diagram of a scenario of a recommendation method according to another embodiment of the present disclosure;
Fig. 12 is a schematic diagram of a scenario of a recommendation method according to still another embodiment of the present disclosure;
Fig. 13 is a block diagram of a structure of a recommendation apparatus according to an embodiment of the present disclosure; and
Fig. 14 is a schematic diagram of a hardware structure of an electronic device according to an embodiment of the present disclosure.

### DETAILED DESCRIPTION

The embodiments of the present disclosure are described in more detail below with reference to the accompanying drawings. Although some embodiments of the present disclosure are shown in the accompanying drawings, it should be understood that the present disclosure may be implemented in various forms and should not be construed as being limited to the embodiments set forth herein. Rather, these embodiments are provided for a more thorough and complete understanding of the present disclosure. It should be understood that the accompanying drawings and the embodiments of the present disclosure are only for exemplary purposes, and are not intended to limit the scope of protection of the present disclosure.

It should be understood that the various steps described in the method implementations of the present disclosure may be performed in different orders, and/or performed in parallel. Furthermore, additional steps may be included and/or the execution of the illustrated steps may be omitted in the method implementations. The scope of the present disclosure is not limited in this respect.

The term "include/comprise" used herein and the variations thereof are an open-ended inclusion, namely, "include/comprise but not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first" and "second" mentioned in the present disclosure are only used to distinguish different apparatuses, modules, or units, and are not used to limit the sequence of functions performed by these apparatuses, modules, or units or interdependence.

It should be noted that the modifiers "one" and "a plurality of' mentioned in the present disclosure are illustrative and not restrictive, and those skilled in the art should understand that unless the context clearly indicates otherwise, the modifiers should be understood as "one or more".

The names of messages or information exchanged between a plurality of apparatuses or modules in the implementations of the present disclosure are used for illustrative purposes only, and are not used to limit the scope of these messages or information.

At present, when a user needs to search for a commodity, but the user may not know the name of the commodity or the keyword entered by the user does not match the commodity, the conventional method of keyword searching and sorted presentation may not allow the user to quickly find commodity information meeting their requirement. In addition, the user needs to open an e-commerce application, enter a keyword, search, and so on, and the operation steps are complex. Therefore, the recommendation method provided in the prior art has complex operation steps, and cannot allow a recommended object required by the user to be quickly found, thereby affecting the user experience.

In order to solve the above problems, a technical concept of the present disclosure is as follows. In order to facilitate a user in searching for a same object (or a similar object) when viewing a video on a video stream page, the user can request to search for the similar object (which may be referred to as a recommended object herein) via an interaction mode of screenshots. That is, if an object type of a target object in an obtained video screenshot image is a preset type, the video screenshot image and an object recommendation control that provides the user with an operation function are displayed on the video stream page. When the user triggers the function of searching for a recommended object via the interaction mode, a search operation starts, and a recommendation result page is presented on the video stream page, where if the recommended object is found, the found content, i.e., attribute information of the recommended object, is displayed. Therefore, the user experience can be improved by quickly searching for the same object via the convenient interaction mode.

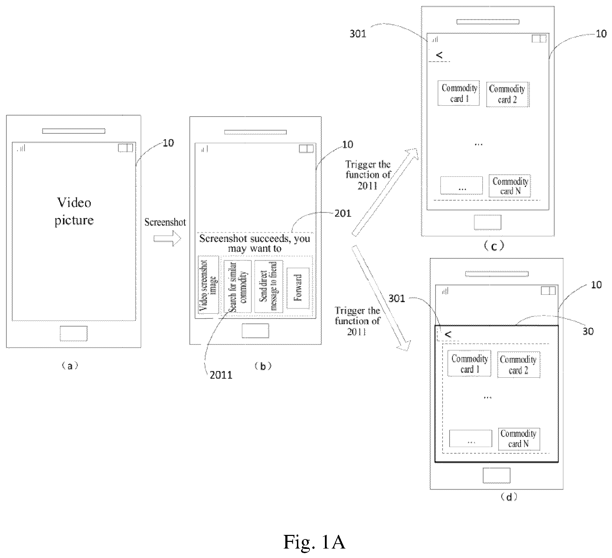

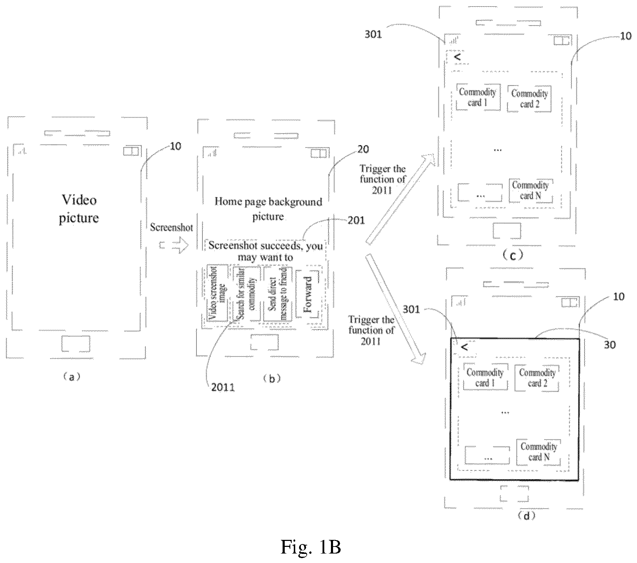

In actual applications, for example, on a video stream page provided by an application, a video (such as a short video) may be played, and a target object of a preset type may be presented on the video. The object here may be a commodity. For example, in a scenario where the video stream page does not carry a details link of the commodity in the video, refer to Fig. 1. Fig. 1 is a schematic diagram of a scenario of a recommendation method according to an embodiment of the present disclosure. The recommendation method is described in detail below by using an example in which the object is a commodity, the preset type is a commodity type, attribute information is a commodity card carrying content information of a corresponding commodity, and a recommended object is a (video-related) similar commodity.

An execution body of the recommendation method may be a terminal device, and the terminal device here may interact with a user. For example, the terminal device may be configured with a touch screen, a sensing screen, etc., so as to interact with the user in a contact- or sensor-based manner, etc. Alternatively, the user may interact with the terminal device via another device (such as a mouse or a stylus). For example, the terminal device may be an intelligent terminal such as a mobile phone, a tablet, or a computer, which is not specifically limited herein.

Specifically, the user views, via a target application (for example, the target application can record a short video) installed on the terminal device, a video posted by another user, and if the user needs to search for a commodity in the video while viewing the video, the user can take a video screenshot on the video stream page 10 on which the video is played. For example, a video picture is displayed on the video stream page, and a screenshot is taken on a commodity in the video picture that needs to be searched for, as shown in (a) of Fig. 1A and (a) of Fig. 1B.

After the terminal device detects the video screenshot operation, while the video screenshot image is obtained, if the object type of the target object recognized in the video screenshot image is a commodity type, a screenshot panel (as shown in Fig. 1A) is displayed on the video stream page 10 or a jump is made to an operation page 20 (for example, different from other pages of the video stream page, as shown in Fig. 1B) for display, where the screenshot panel is displayed on the operation page, and a home page background picture or another background of a creator viewed by the user may also be displayed. The picture displayed on the operation interface is not limited herein.

A first function control 2011 is configured and the video screenshot image is displayed on the screenshot panel 201, where the first function control 2011 can provide the user with a function of searching for a recommended object. Other function controls may further be configured, such as a "Send direct message to friend" control, or a "Forward" control, as shown in (b) of Fig. 1A and (b) of Fig. 1B.

The user may perform a touch operation (i.e., a first trigger operation, such as a tap operation or a touch-and-hold operation) for the first function control on the video stream page 10 or the operation page 20. The terminal device starts to search for a video-related recommended object matching the video screenshot image. If the video-related recommended object matching the video screenshot image is found, a commodity card of the video-related similar commodity is displayed (attribute information is carried on the commodity card, i.e., information content of the corresponding commodity; or the attribute information may include information content of the corresponding commodity). The commodity card may be presented in the form of a thumbnail of the commodity (the thumbnail here contains a link to a details page of the commodity), where the details page of the commodity can be accessed by tapping the thumbnail, or may be presented in the form of a details page link of the commodity, etc. This is not specifically limited herein.

A display mode of the commodity card may be displaying the commodity card on a user interface by, for example: switching video content played on the user interface to various commodity cards, such as Commodity card 1, Commodity card 2, ..., and Commodity card N, as shown in (c) of Fig. 1A and (c) of Fig. 1B; or displaying the recommendation result page 30 on the video stream page by, for example: superimposing the recommendation result page on the video stream page, as shown in (d) of Fig. 1A and (d) of Fig. 1B; or jumping to another page (e.g., a new page) for display. A "Back" functional button 301 may be configured on an interface or a page on which a commodity card is displayed.

In addition, the terminal device further supports finding a recalled commodity in the similar content and then performing an e-commerce commodity quality review, that is, if there is no problem with the e-commerce commodity, it passes. The terminal device may further support finding a recalled commodity in the similar content and then performing a similarity review, that is, if the similarity meets the standard, it passes. For a commodity with no similar commodity recognized in an open store: alternative text "No similar commodity found for the moment" is presented, which supports going to a mall. Recalled commodities are supported, and for a commodity with similar commodities recognized in an open store: the same object or a recommended object is displayed, and may be arranged in a mixed manner according to similarity and personalization.

The recommendation method according to an embodiment of the present disclosure can be applied to a platform for providing video posting for a user, where the user can post a self-created video or forward a video of another user with authorization via the platform. A commodity may be displayed in the video created by the user; another user may view the video, and if there is a search requirement for the commodity presented in the video, the another user may request to search for a recommended object via an interaction mode of screenshots without a series of operations such as opening an e-commerce application, entering a keyword, and search. Then a page for searching for the recommended object is used to provide an operation page for the user. When the user triggers the function of searching for a similar commodity, the search operation starts, and if the similar commodity is found, the found content, i.e., a commodity card, is displayed. Therefore, the user experience can be improved by quickly searching for the similar object via the convenient interaction mode.

The embodiments of the present disclosure can be applied to a scenario where a video is played, a scenario where a picture is played, etc., which is not specifically limited herein. In the following embodiments, the recommendation method is described in detail by using the scenario where the video is played as an example.

In addition, it should be understood by those skilled in the art that a "trigger" operation may include, but is not limited to: a tap trigger, that is, a user implements trigger by tapping a corresponding button or any position in an interface; a gesture trigger, where a user implements a trigger operation by making a corresponding gesture; a speech trigger, that is, a user implements a trigger operation by speaking a corresponding speech instruction; an expression trigger, that is, a trigger operation is implemented by making a corresponding expression; a time trigger, that is, a trigger operation is implemented by arriving at a timed time, and the like, and the trigger operation is not limited in the present disclosure. Corresponding trigger logic can be configured according to a specific scenario so as to implement the trigger operation.

It should be noted that Fig. 1A and Fig. 1B are merely exemplary, and a display layout and positions of content on a screen, such as the video stream page, the recommendation result page, and other pages, are not specifically limited. The position and proportion of each part of the content on the screen can be configured according to specific scenario requirements.

The technical solutions of the present disclosure are described in detail below with specific embodiments. The following several specific embodiments may be combined with each other, and the same or similar concepts or processes may not be repeated in some of the embodiments.

A video screenshot operation is used for representing an operation of taking a screenshot of content in a video, and the content here may refer to a target object, such as one or some commodities. A video screenshot image is used for representing content of the screenshot. An operation page is used for representing a page for providing a user with an operation, and here refers to a page for providing the user with a search for a same object (or a similar object or a recommended object). The recommended object is used for representing a commodity similar to the content of the screenshot.

In an embodiment, a recommendation method may be implemented as follows.

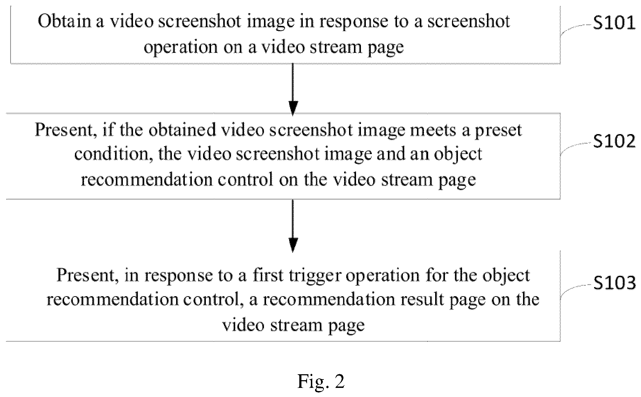

Fig. 2 is a schematic flowchart of a recommendation method according to an embodiment of the present disclosure. The recommendation method may include the following steps.

S101: Obtain a video screenshot image in response to a screenshot operation on a video stream page.

The video stream page is used for playing a video.

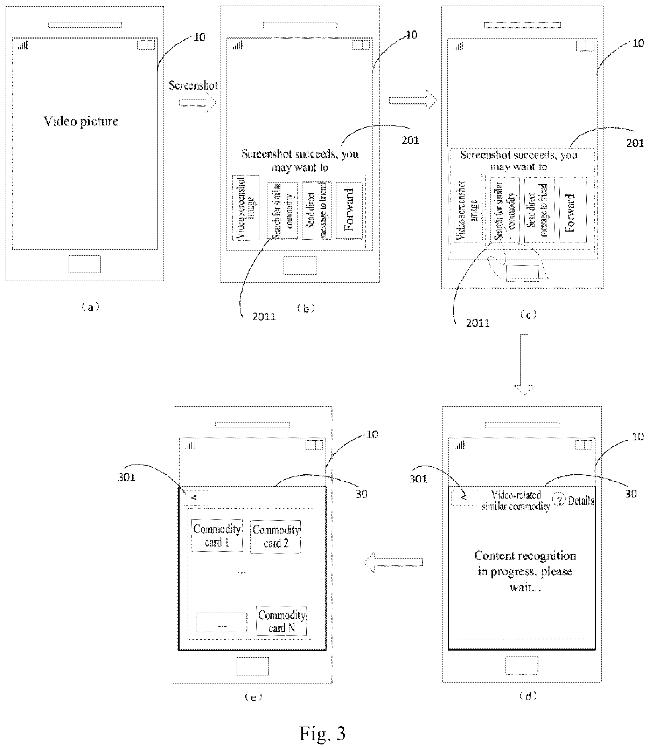

The method of the embodiment of the present disclosure may be applied in a terminal device on which the video stream page for playing the video may be displayed. In the following description, for example, there is no details link (such as a link for purchasing a commodity) of the commodity in the video on the video stream page, and when a user needs to search for a commodity while viewing the played video, the user may take a video screenshot on the video stream page on which the video is played (as shown in (a) of Fig. 3, i.e., (a) of Fig. 1A). The terminal device may obtain the video screenshot image after detecting the video screenshot operation.

S102: Present, if the obtained video screenshot image meets a preset condition, the video screenshot image and an object recommendation control on the video stream page. The preset condition is that an object type of a target object in the video screenshot image is a preset type.

The object recommendation control is used for providing a function of searching for a recommended object. The preset type is a commodity type, for example.

In an embodiment of the present disclosure, if the object type of the target object in the obtained video screenshot image is the commodity type, it indicates that the obtained video screenshot image meets the preset condition, and then a recommendation result page including attribute information of a recommended object corresponding to the target object is presented on the video stream page. If there are only people in the video screenshot image, the displayed recommendation result page has empty content.

For example, a screenshot panel is presented on the video stream page (as shown in (b) of Fig. 3, i.e., (b) of Fig. 1A). The screenshot panel here includes, but is not limited to, an object recommendation control for representing searching for the recommended object, and the object recommendation control may represent a search control for providing a function of looking for the recommended object or searching for the recommended object.

The video screenshot operation may be implemented by the user triggering a screenshot function that the terminal device used by the user comes with, or may be implemented by the user triggering a screenshot function contained on the video stream page, and the implementation of the video screenshot operation is not limited herein.

S103: Present, in response to a first trigger operation for the object recommendation control, a recommendation result page on the video stream page.

The recommendation result page includes attribute information of a recommended object corresponding to the target object.

In an embodiment of the present disclosure, the first trigger operation here may include, but is not limited to, a tap operation. For the tap operation, for example, when the user taps a first function control on an operation page, a search function is triggered (as shown in (c) of Fig. 3), and a video-related recommended object matching the video screenshot image can be searched for. Here, the video-related recommended object may be determined based on a similarity. A "Function details" control 302 may further be displayed on the recommendation result page, and the "Function details" control 302 can be tapped, for example, a "question mark" button may be tapped, and then the function details pop up, which include function details text. The function details text includes: a title, function details of searching for a recommended object, etc.

In the following embodiments, the recommendation result page is described in detail by using a display mode of presenting the recommendation result page on the video stream page and presenting the attribute information on the recommendation result page as an example.

For example, as shown in (d) of Fig. 3, during searching, the recommendation result page 30 may be displayed on the video stream page 10, and at this time, "Content recognition in progress, please wait...".is displayed on the recommendation result page 30. In order to allow the user to see clearly and visually what is shown on the current interface, a search title "Video-related similar product" may further be displayed on the recommendation result page, the position of which may include, but is not limited to, the top middle of the recommendation result page. The recommendation result page here may be represented as a landing page of searching for similar objects.

Specifically, if the recommended object matching the video screenshot image is found, the attribute information of the found recommended object is displayed.

The attribute information includes information content of the corresponding commodity.

As shown in (e) of Fig. 3 (i.e., (d) of Fig. 1A), a card of the recommended object, such as a commodity card, carries the attribute information, and the commodity card of the recommended object can be displayed on the recommendation result page. If the recommended object matching the video screenshot image is found, the search result is displayed on the recommendation result page, that is, the commodity card of the found recommended object is displayed, where the commodity card carries the attribute information, such as Commodity card 1, Commodity card 2, ..., and Commodity card N. The user can visually see the information content of the found commodity on the video stream page, such as description information or a price of the commodity.

The recommendation method provided in this embodiment of the present disclosure includes: obtaining a video screenshot image in response to a screenshot operation on a video stream page; presenting, if the obtained video screenshot image meets a preset condition, the video screenshot image and an object recommendation control on the video stream page, where the preset condition is that an object type of a target object in the video screenshot image is a preset type; and presenting, in response to a first trigger operation for the object recommendation control, a recommendation result page on the video stream page, where the recommendation result page includes attribute information of a recommended object corresponding to the target object. In order to facilitate a user in searching for a same object (or a similar object) when viewing a video on a video stream page, the user can request to search for the similar object (which may be referred to as a recommended object herein) via an interaction mode of screenshots. That is, if an object type of a target object in an obtained video screenshot image is a preset type, the video screenshot image and an object recommendation control that provides the user with an operation function are displayed on the video stream page. When the user triggers the function of searching for a recommended object via the interaction mode, a search operation starts, and a recommendation result page is presented on the video stream page, where if the recommended object is found, the found content, i.e., attribute information of the recommended object, is displayed. Therefore, the user experience can be improved by quickly searching for the same object via the convenient interaction mode.

In an embodiment of the present disclosure, on the basis of the above embodiments, the following describes in detail how to search for and display a recommended object matching the video screenshot image. The presenting, in response to a first trigger operation for the object recommendation control, a recommendation result page on the video stream page may be implemented by the following steps:
Step a1: Recognize the video screenshot image in response to the first trigger operation for the object recommendation control, so as to obtain at least one target object.
Step a2: For each of the at least one target object, search to determine whether there is an object with a similarity to the target object that is greater than a preset similarity threshold.
Step a3: If there is the object, obtain the attribute information of the recommended object corresponding to each target object, and present the recommendation result page on the video stream page and display a card carrying the attribute information of the recommended object on the recommendation result page. Here, the card is, for example, the commodity card.

In an embodiment of the present disclosure, the target object in the video screenshot image is recognized by an image recognition technology, where the target object here may be an intended commodity, i.e., a commodity to be searched. Then, a commodity with the similarity to the target object that is greater than the preset similarity threshold is searched for, and reference may be made to (c) of Fig. 3 for the recommendation result page, and the same commodities in the found commodities are removed and finally a recommended object is determined, i.e., the video-related recommended object. One intended commodity may correspond to at least one recommended object, and the recommended object here refers to a recommended commodity.

In an embodiment of the present disclosure, the recommendation result page may be displayed on the video stream page during searching on the basis of the above embodiments, and the following describes in detail how to display the recommendation result page on the video stream page. The presenting a recommendation result page on the video stream page may be implemented by the following steps:
Step b1: Display the recommendation result page in a first preset region of the video stream page.
Step b2: Display an object frame presentation region and an object presentation region on the recommendation result page, where the object frame presentation region is used for displaying an identifier of the at least one target object, and the object presentation region is used for displaying the attribute information of the recommended object. Step b3: Present, in the object presentation region, attribute information of a recommended object corresponding to an identifier of a target object that is currently selected and presented.

A picture of the target object that is currently selected and presented is an identifier of a target object that is currently presented at a predefined position in the object frame presentation region. Here, the identifier may be a picture, text, or a control, etc., and the display form of the identifier is not specifically limited herein.

The following describes the recommendation method in detail by using an example in which the object frame presentation region is a commodity frame presentation region 31, the object presentation region is a commodity presentation region 32, the recommended object is the recommended commodity, and the identifier of the target object is the picture of the target object.

In an embodiment of the present disclosure, the first preset region may be a region of a preset proportion of the whole screen, such as a region occupied by a nine-tenths screen, as shown in (d) of Fig. 1, and the recommendation result page is superimposed on the video stream page.

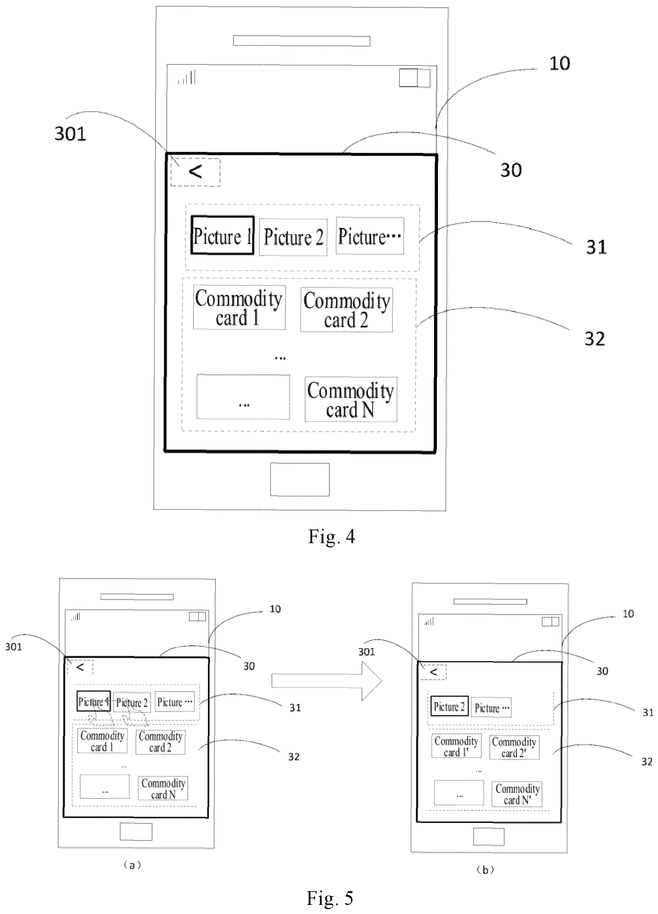

On the basis of (d) of Fig. 1, as shown in Fig. 4, the key commodity frame presentation region 31 and the commodity presentation region 32 are arranged on the recommendation result page, where at least one picture of an intended commodity is presented in the commodity frame presentation region, one target object corresponds to one intended commodity, one intended commodity corresponds to one picture of the intended commodity, and the picture of the intended commodity may be selected by ranking based on indexes, such as a click-through rate or a sales volume of at least one recommended object corresponding to the target object, and the selection of the picture of the intended commodity is not specifically limited herein.

If there are a plurality of pictures of intended commodities, the pictures of the intended commodities and respective commodity cards corresponding to the intended commodities may be presented in order according to a predefined ordering rule. Specifically, the pictures (e.g., Picture 1, Picture 2, ..., and Picture N) of the intended commodities presented in the intended-commodity frame presentation region 31 may be sorted in a personalized manner, for example, by a click through rate (ctr). The predefined position here may be a position where a picture of the first intended commodity is located, i.e., the leftmost position (for example, the position of Picture 1 shown in Fig. 4). For example, a picture of the first key frame commodity, i.e., of the first intended commodity, is selected by default, and a horizontal swipe operation can be supported to provide a switching function for the user.

In an embodiment of the present disclosure, the recommendation method is described in detail on the basis of the above embodiments. If an object type of a plurality of target objects in the video screenshot image is the preset type, the recommendation method may further be implemented by the following steps:
Step c1: Determine, in response to a select operation on an identifier of any one of the target objects in the object frame presentation region, the selected target object as a target object to be presented.
Step c2: Display, in the object presentation region, attribute information of a recommended object corresponding to the target object to be presented.

In an embodiment of the present disclosure, the information content carried on the commodity cards may include, but is not limited to, commodity banners, commodity tags, commodity titles, commodity prices, commodity sales volumes, commodity interests, negative feedback, etc. Specifically, the commodity banners may be presented. The commodity tags may be presented, for example, one commodity tag may be presented. The commodity titles may be presented, such as two lines of a title may be presented, with an overlong title being truncated. Detailed discount prices in commodity details may be presented, e.g., for seckill commodities, the following is presented: 88 yuan seckill, buy now; for group-buying commodities, the following is presented: 88 yuan group buying, join now; for scheduled sales, the following is presented: 88 yuan scheduled sales, reminder for sales; for presales requiring a deposit, the following is presented: 88 yuan for presales price, 30 yuan for deposit, pay the deposit; for seckill notice, the following is presented: 88 yuan seckill, buy now; for full-price presales, the following is presented: 88 yuan for presales price, buy now; for commodities offering a threshold discount: 88 yuan after threshold discount, buy now; for activities allowing "coupons" to be stacked or commodities using a "coupon", the following is presented: 88 yuan after using the coupon, buy now; and for commodities with no discount or "coupon", the following is presented: 88 yuan, buy now. The commodity sales volumes are consistent with commodity details, and the sales volumes are not presented when there is a promotional price or the sales volume is 0. The commodity interests include priorities, and in terms of priorities, promotional tag > service tag, where the promotional tag includes: 10 billion yuan subsidies, first-time customer discount, first-time customer cash coupon, cash-back on a first order, coupon, threshold discount, buy now, pay later, etc., and the service tag includes: authenticity guarantee, free shipping, 48-hour shipping, free return shipping, etc. The negative feedback includes a negative feedback button that appears upon long-pressing the commodity banners. For example, if "Inaccurate recognition" is tapped, the negative feedback shows "Thank you for your feedback, we will continuously optimize our recognition capabilities"; and if "Not interested" or "Picture causes discomfort" is tapped, the negative feedback shows "Operation successful", which will reduce the recommendation of such commodities.

The select operation includes a second trigger operation or a third trigger operation. The determining, in response to a select operation on an identifier of any one of the target objects in the object frame presentation region, the selected target object as a target object to be presented may be implemented by the following steps:
Step c11: Determine, in response to the second trigger operation performed in the object frame presentation region, the target object presented at the predefined position as the selected target object. Alternatively, in response to the third trigger operation performed on a picture of a target object in the object frame presentation region:
Step c12: Determine the selected target object as the target object to be presented.

In an embodiment of the present disclosure, the second trigger operation may be a swipe operation, and the swipe operation here may be implemented in at least the following two modes.

In Mode 1, a swipe operation may be performed on a picture of a target object in the commodity frame presentation region. For example, on the basis of Fig. 4, as shown in Fig. 5 in which the swipe operation is performed from a starting contact to a final contact, a picture of a target object at a position of the starting contact is determined as a picture of the target object to be presented, and the final contact is located at the predefined position.

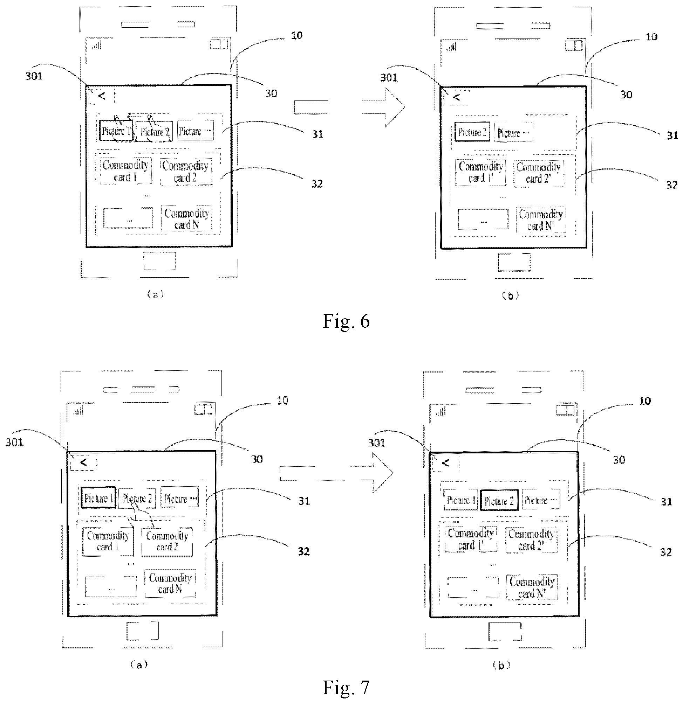

In Mode 2, a horizontal swipe operation may be performed on a site other than the picture of the target object in the commodity frame presentation region. For example, on the basis of Fig. 4, as shown in Fig. 6 in which regardless of the position of the starting contact, as long as the final contact is determined to be at the predefined position by horizontal swiping, a picture at the predefined position is determined as a picture of the target object.

The third trigger operation here may be a tap operation. As shown in Fig. 7, the picture of the target object may be tapped directly.

Specifically, by means of the second trigger operation or the third trigger operation, the user may switch the commodity card of the recommended commodity corresponding to the picture of the intended commodity that is currently selected and presented (that is, the commodity cards presented in the commodity presentation region before the second trigger operation or the third trigger operation) to the commodity card of the recommended commodity corresponding to the target key associated commodity. For example, Picture 1 is switched to Picture 2, and accordingly, Commodity card 1, Commodity card 2, ..., and Commodity card N are switched to Commodity card 1', Commodity card 2', ..., and Commodity card N'.

Specifically, the switching function is provided for the user, and the picture of the intended commodity presented in the commodity frame presentation region is linked to the commodity cards presented in the commodity presentation region, that is, when a picture of an intended commodity is tapped, commodity cards of recommended commodities corresponding to the picture of the intended commodity are switched to for presentation accordingly in the commodity presentation region. Therefore, the switching function can be provided for the user, thereby facilitating user in filtering.

In an embodiment of the present disclosure, the recommendation method is described in detail on the basis of the above embodiments. A recommended object corresponding to the at least one target object is classified into at least one category, and one category corresponds to one navigation key. The recommendation method may be implemented by the following step:
displaying a navigation region on the recommendation result page, where the navigation region includes at least one navigation key and at least one first function control, the navigation key is used for providing a function of switching between attribute information of recommended objects corresponding to different categories in the object presentation region, and the first function control is used for providing a user with a function of filtering conditions of the recommended objects.

In an embodiment of the present disclosure, when a plurality of commodity categories are recognized, all are selected by default, and the recognized commodity-leaf category (e.g., the picture of the intended commodity) is exposed to which the user can manually switch. The plurality of commodity categories here may be a plurality of target objects, where one target object corresponds to at least one recommended commodity, and one target object corresponds to one intended commodity, that is, one intended commodity corresponds to at least one recommended commodity. If only one commodity category is recognized in the video screenshot image, all are presented and selected by default.

At least one recommended commodity corresponding to each intended commodity is classified to obtain at least one category corresponding to the intended commodity. Alternatively, at least one recommended commodity corresponding to all intended commodities may be classified uniformly to obtain at least one category.

Specifically, the recommended commodities are classified, and the navigation key for classification is displayed on the recommendation result page so as to provide the user with the convenient switching function. Presentation positions of the recommended commodities are sorted, and the first function control for sorting is displayed on the recommendation result page.

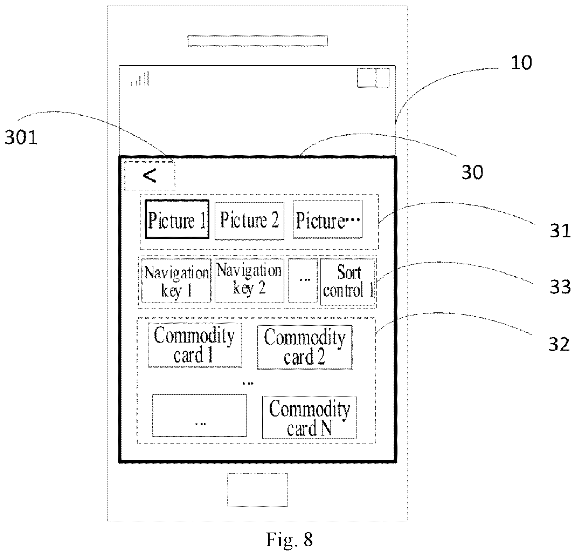

For example, as shown in Fig. 8, navigation keys displayed in the navigation region 33 may include Navigation key 1, Navigation key 2, ..., and Navigation key N, e.g., to all, beverage, snack, or digital. The first function control may include Sort control 1, Sort control 2, ..., and Sort control N, e.g., a comprehensive sort control, a sales volume sort control, or a price train control. For example, the display layout of the commodity cards can be sorted by default in a comprehensive order. The cards are supported to be sorted by a user in a comprehensive order, or by sales volume, price, etc. For example, sales volumes upon the first click are sorted in a descending order, or prices upon the first click are sorted in an ascending order. The navigation key and the first function control may be superimposed in the same row, or may be displayed in parallel in different rows. Fig. 8 shows an example of superimposed display, which is merely exemplary, and does not specifically limit the display positions of the navigation key and the first function control.

In an embodiment of the present disclosure, the recommendation method is described in detail on the basis of the above embodiments. The recommendation method may be implemented by the following steps:
Step e1: For each of the at least one target object, search to determine whether there is the object with the similarity to the target object that is greater than the preset similarity threshold, and display a search title in the recommendation result page during searching.
Step e2: If the object with the similarity to the target object that is greater than the preset similarity threshold is found, hide the search title displayed on the recommendation result page.
Step e3: If the object with the similarity to the target object that is greater than the preset similarity threshold is not found, display prompt information for indicating that no recommended object is found on the recommendation result page, and display a navigation identifier on the recommendation result page, where the navigation identifier is used for indicating an identifier for providing a user with a service for searching for another object.

The another object here refers to an object other than the obtained target object and the recommended object.

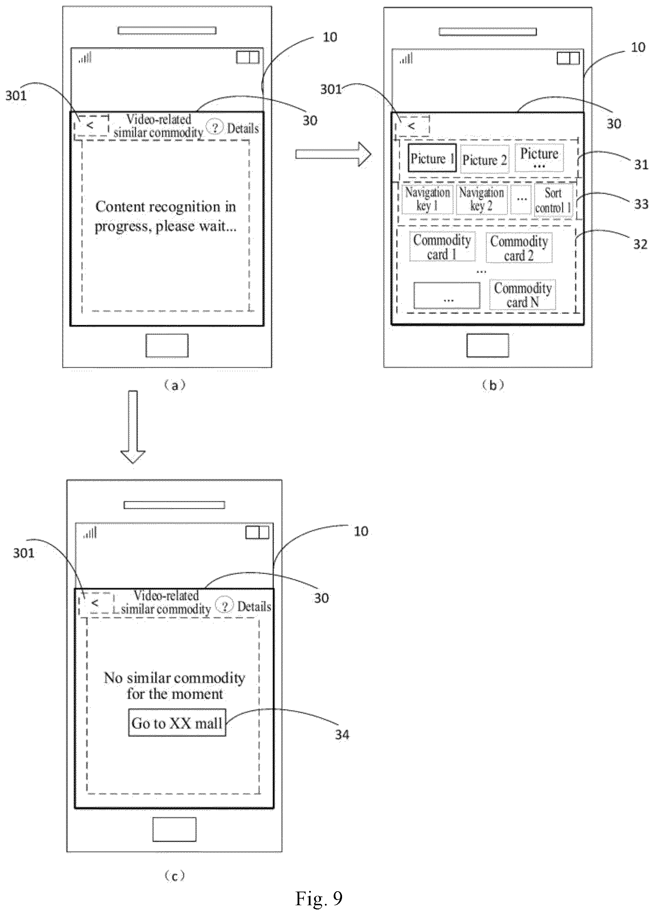

In an embodiment of the present disclosure, as shown in Fig. 9, during searching, the recommendation result page 30 may be displayed on the video stream page 10, and at this time, "Content recognition in progress, please wait...".is displayed on the recommendation result page 30. In order to allow the user to see clearly and visually what is shown on the current interface, a search title "Video-related similar product" may further be displayed on the recommendation result page, the position of which may include, but is not limited to, the top middle of the recommendation result page. The recommendation result page here may be represented as a landing page of searching for similar objects, as shown in (a) of Fig. 9 (i.e., (d) of Fig. 3).

If a video-related similar commodity matching the video screenshot image is found, the search title displayed on the recommendation result page is hidden, as shown in (b) of Fig. 9 (i.e., as shown in Fig. 8). If no video-related similar commodity matching the video screenshot image is found, "No similar commodity for the moment" is displayed on the recommendation result page, and a navigation window 34 of "Go to XX mall" is displayed, as shown in (c) of Fig. 9.

In an embodiment of the present disclosure, the recommendation method is described in detail on the basis of the above embodiments. The recommendation method may further be implemented by the following step:
enlarging a display region area of the recommendation result page on the video stream page in response to a swipe-up operation performed on the recommendation result page.

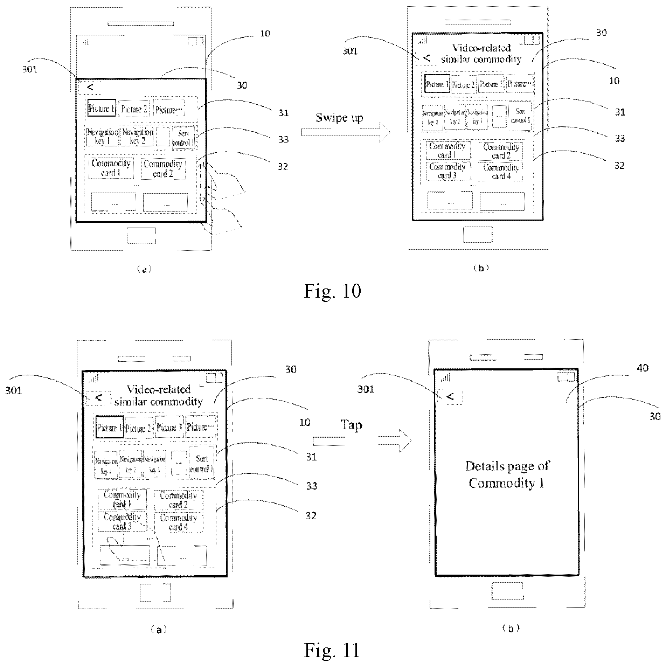

In an embodiment of the present disclosure, the swipe-up operation here, i.e., swiping up, may refer to swiping up in a region on the video stream page outside the search result page, or swiping up directly on the search result page. For example, on the basis of Fig. 8, a swipe-up operation is implemented to enlarge the display region area of the recommendation result page on the video stream page, as shown in Fig. 10. Specifically, the recommendation result page supports full-screen presentation by pulling up, and the user may perform a swipe-up operation on the recommendation result page for full-screen display or jumping to the recommendation result page on the video stream page for display. At this time, the search title "Video-related similar commodity" can be redisplayed on the recommendation result page. At the same time, the recommended objects presented in the recommendation result page are extended, that is, attribute information of the recommended objects is added to the recommendation result page, and the displayed recommended objects are more than the previously displayed content.

In an embodiment of the present disclosure, the recommendation method is described in detail on the basis of the above embodiments. The recommendation method may further be implemented by the following step:
displaying, in response to a fourth trigger operation performed on the attribute information of the recommended object presented in the object presentation region, a recommended object details page corresponding to the recommended object.

In an embodiment of the present disclosure, the fourth trigger operation may be a tap operation, and the user goes to a details page of a corresponding commodity by tapping a commodity card, for example, on the basis of Fig. 10, as shown in Fig. 11 (for example, tapping "Commodity card 1" to jump to a details page 40 (or a landing page) of Commodity 1 corresponding to Commodity card 1 for display, where the details page may be displayed on the video stream page, or may be another page different from the video stream page; and (b) of Fig. 11 shows that the details page is displayed on the video stream page). The details page of the commodity here may include information content carried on the commodity cards, such as commodity banners, commodity tags, commodity titles, commodity prices, commodity sales volumes, commodity interests, negative feedback, etc.

In an embodiment of the present disclosure, the recommendation method is described in detail on the basis of the above embodiments. The recommendation method may further be implemented by the following steps:
Step f1: Display, in response to a fifth trigger operation performed on the attribute information of the recommended object presented in the object presentation region, a second function control on the attribute information of the recommended object, where the second function control includes at least one functional touch region.
Step f2: Report, in response to a sixth trigger operation performed in a target functional touch region, feedback information corresponding to the target functional touch region.

The second function control is used for providing the user with a function of giving feedback on the attribute information of the recommended object, and the second function control includes at least one functional touch region.

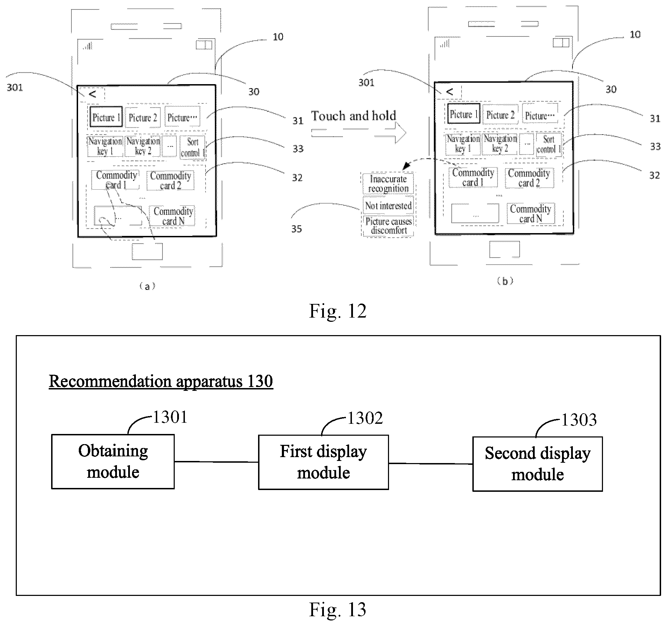

In an embodiment of the present disclosure, the fifth trigger operation here may be a touch-and-hold operation. For example, on the basis of Fig. 8, reference is made to Fig. 12. For example, the second function control 35 may be displayed when a touch-and-hold operation is performed on the commodity card, and the second function control 35 may include at least one functional touch region. The second function control 35 may be directly overlaid on the commodity card on which the touch-and-hold operation is performed, or another position on the screen, and the display position of the second function control shown in Fig. 12 is merely exemplary and is not specifically limited herein.

Specifically, the user is provided with a function of feedback on the picture card, and the functional touch region here may include, but is not limited to: "Inaccurate recognition" touch region, "Not interested" touch region, and "Picture causes discomfort" touch region. The second function control here may be represented as a negative feedback function control that includes a negative feedback button that appears upon long-pressing the commodity banners. For example, if "Inaccurate recognition" is tapped, the negative feedback shows "Thank you for your feedback, we will continuously optimize our recognition capabilities"; and if "Not interested" or "Picture causes discomfort" is tapped, the negative feedback shows "Operation successful", which will reduce the recommendation of such commodities.

Corresponding to the recommendation method in the embodiments disclosed above, Fig. 13 is a block diagram of a structure of a recommendation apparatus according to an embodiment of the present disclosure. The recommendation apparatus may be configured in a terminal device. For ease of illustration, only parts related to this embodiment of the present disclosure are shown. Referring to Fig. 13, the recommendation apparatus 130 may include: an obtaining module 1301, a first display module 1302, and a second display module 1303. The obtaining module 1301 is configured to obtain a video screenshot image in response to a screenshot operation on a video stream page. The first display module 1302 is configured to present, when the obtained video screenshot image meets a preset condition, the video screenshot image and an object recommendation control on the video stream page, where the preset condition is that an object type of a target object in the video screenshot image is a preset type. The second display module 1303 is configured to present, in response to a first trigger operation for the object recommendation control, a recommendation result page on the video stream page, where the recommendation result page includes attribute information of a recommended object corresponding to the target object.

The obtaining module 1301, the first display module 1302, and the second display module 1303 provided in the embodiment of the present disclosure obtain a video screenshot image in response to a screenshot operation on a video stream page; present, if the obtained video screenshot image meets a preset condition, the video screenshot image and an object recommendation control on the video stream page, where the preset condition is that an object type of a target object in the video screenshot image is a preset type; and present, in response to a first trigger operation for the object recommendation control, a recommendation result page on the video stream page, where the recommendation result page includes attribute information of a recommended object corresponding to the target object. In order to facilitate a user in searching for a same object (or a similar object) when viewing a video on a video stream page, the user can request to search for the similar object (which may be referred to as a recommended object herein) via an interaction mode of screenshots. That is, if an object type of a target object in an obtained video screenshot image is a preset type, the video screenshot image and an object recommendation control that provides the user with an operation function are displayed on the video stream page. When the user triggers the function of searching for a recommended object via the interaction mode, a search operation starts, and a recommendation result page is presented on the video stream page, where if the recommended object is found, the found content, i.e., attribute information of the recommended object, is displayed. Therefore, the user experience can be improved by quickly searching for the same object via the convenient interaction mode.

The apparatus provided in this embodiment of the present disclosure may be configured to perform the technical solution in the recommendation method embodiment according to any embodiment of the first aspect. The implementation principles and technical effects thereof are similar, which are not repeated in this embodiment of the present disclosure.

In an embodiment of the present disclosure, a processing module is described in detail in the embodiment of the present disclosure on the basis of the embodiments disclosed above. The second display module is specifically configured to:
recognize the video screenshot image in response to the first trigger operation for the object recommendation control, so as to obtain at least one target object;
for each of the at least one target object, search to determine whether there is an object with a similarity to the target object that is greater than a preset similarity threshold; and
if there is the object, obtain the attribute information of the recommended object corresponding to each target object, and present the recommendation result page on the video stream page and display a card carrying the attribute information of the recommended object on the recommendation result page, where one target object corresponds to at least one recommended object.

In an embodiment of the present disclosure, the second display module is specifically configured to:
display the recommendation result page in a first preset region of the video stream page;
display an object frame presentation region and an object presentation region on the recommendation result page, where the object frame presentation region is used for displaying an identifier of the at least one target object, and the object presentation region is used for displaying the attribute information of the recommended object; and
present, in the object presentation region, attribute information of a recommended object corresponding to an identifier of a target object that is currently selected and presented, where the identifier of the target object that is currently selected and presented is an identifier of a target object that is currently presented at a predefined position in the object frame presentation region.

In an embodiment of the present disclosure, the recommendation apparatus further includes: a processing module. The processing module is configured to:
determine, when an object type of a plurality of target objects in the video screenshot image is the preset type, and in response to a select operation on an identifier of any one of the target objects in the object frame presentation region, the selected target object as a target object to be presented; and
display, in the object presentation region, attribute information of a recommended object corresponding to the target object to be presented.

In an embodiment of the present disclosure, the select operation includes a second trigger operation or a third trigger operation. The processing module is specifically configured to:
determine, in response to the second trigger operation performed in the object frame presentation region, the target object presented at the predefined position as the selected target object; or
determine, in response to the third trigger operation performed on a picture of a target object in the object frame presentation region, the selected target object as the target object to be presented.

In an embodiment of the present disclosure, a recommended object corresponding to the at least one target object is classified into at least one category, and one category corresponds to one navigation key. The processing module is further configured to:
display a navigation region on the recommendation result page, where the navigation region includes at least one navigation key and at least one first function control, the navigation key is used for providing a function of switching between attribute information of recommended objects corresponding to different categories in the object presentation region, and the first function control is used for providing a user with a function of filtering conditions of the recommended objects.

In an embodiment of the present disclosure, the recommendation apparatus may further include a third display module. The third display module is configured to:
for each of the at least one target object, search to determine whether there is the object with the similarity to the target object that is greater than the preset similarity threshold, and display a search title in the recommendation result page during searching;
if the object with the similarity to the target object that is greater than the preset similarity threshold is found, hide the search title displayed on the recommendation result page; or
if the object with the similarity to the target object that is greater than the preset similarity threshold is not found, display prompt information for indicating that no recommended object is found on the recommendation result page, and display a navigation identifier on the recommendation result page, where the navigation identifier is used for indicating an identifier for providing a user with a service for searching for another object.

In an embodiment of the present disclosure, the recommendation apparatus may further include a fourth display module. The fourth display module is configured to:
enlarge a display region area of the recommendation result page on the video stream page in response to a swipe-up operation performed on the recommendation result page.

In an embodiment of the present disclosure, the recommendation apparatus may further include a fifth display module. The fifth display module is configured to:
display, in response to a fourth trigger operation performed on the attribute information of the recommended object presented in the object presentation region, a recommended object details page corresponding to the recommended object.

In an embodiment of the present disclosure, the recommendation apparatus may further include a sixth display module. The sixth display module is configured to:
display, in response to a fifth trigger operation performed on the attribute information of the recommended object presented in the object presentation region, a second function control on the attribute information of the recommended object, where the second function control includes at least one functional touch region; and
report, in response to a sixth trigger operation performed in a target functional touch region, feedback information corresponding to the target functional touch region.

The above modules may be implemented as a software component executed on one or more general-purpose processors, or may be implemented as, for example, hardware that performs certain functions or combinations thereof, such as a programmable logic device and/or an application-specific integrated circuit. In some embodiments, the modules may be embodied in the form of a software product that may be stored on non-volatile storage media that include a computer device (e.g., a personal computer, a server, a network device, a mobile terminal, or the like) caused to perform the method described in the embodiments of the present invention. In an embodiment, the above modules may also be implemented on a single device or may be distributed across a plurality of devices. The functions of these modules may be combined with each other or further split into a plurality of sub-modules.

It can be clearly understood by those skilled in the art that, for convenience and brevity of description, for the specific operation processes of the modules of the apparatus described above, reference may be made to the corresponding processes in the foregoing method embodiments, and details are not described herein again.

Based on the same inventive concept as the method, an embodiment of the present disclosure further provides an electronic device. The electronic device includes a processor and a memory.

The memory stores computer-executable instructions.

The processor executes the computer-executable instructions stored in the memory, to cause the processor to perform the method as described in the above method embodiments.

An embodiment of the present disclosure further provides a computer-readable storage medium storing computer-executable instructions that, when executed by a processor, cause the processor to perform the method as described in the above method embodiments.

An embodiment of the present disclosure further provides a computer program that, when executed by a processor, causes the method as described in the above method embodiments to be implemented.

An embodiment of the present disclosure further provides a computer program product including a computer program that, when executed by a processor, causes the method as described in the above method embodiments to be implemented.

According to the recommendation method and apparatus, the device, the storage medium, and the computer program product provided in the embodiments of the present disclosure, a video screenshot image is obtained in response to a screenshot operation on a video stream page; if the obtained video screenshot image meets a preset condition, the video screenshot image and an object recommendation control are presented on the video stream page, where the preset condition is that an object type of a target object in the video screenshot image is a preset type; and in response to a first trigger operation for the object recommendation control, a recommendation result page is presented on the video stream page, where the recommendation result page includes attribute information of a recommended object corresponding to the target object. In order to facilitate a user in searching for a same object (or a similar object) when viewing a video on a video stream page, the user can request to search for the similar object (which may be referred to as a recommended object herein) via an interaction mode of screenshots. That is, if an object type of a target object in an obtained video screenshot image is a preset type, the video screenshot image and an object recommendation control that provides the user with an operation function are displayed on the video stream page. When the user triggers the function of searching for a recommended object via the interaction mode, a search operation starts, and a recommendation result page is presented on the video stream page, where if the recommended object is found, the found content, i.e., attribute information of the recommended object, is displayed. Therefore, the user experience can be improved by quickly searching for the same object via the convenient interaction mode.

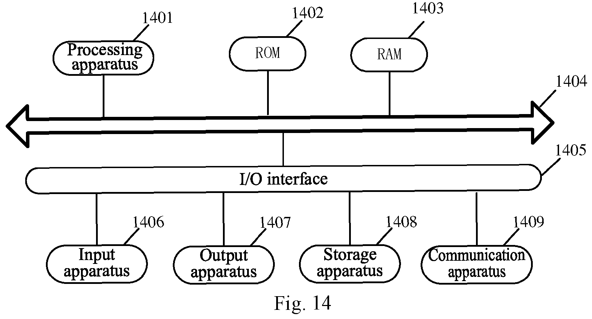

Reference is made to Fig. 14, which shows a schematic diagram of a structure of an electronic device suitable for implementing an embodiment of the present disclosure. The electronic device may be a terminal device. The electronic device includes a processor and a memory. The memory is configured to store a program for performing the method as described in the above method embodiments. The processor is configured to execute the program stored in the memory. The processor may be a processing unit including a central processing unit (CPU) or another form having recommendation capabilities and/or instruction execution capabilities, and may control other components in the electronic device to perform desired functions. The memory may include one or more computer program products, which may include various forms of computer-readable storage media, such as a volatile memory and/or a non-volatile memory. The volatile memory may include, for example, a random access memory (RAM), and/or a cache memory (cache). The non-volatile memory may include, for example, a read-only memory (ROM), a hard disk, a flash memory, etc. One or more computer program instructions may be stored on the computer-readable storage medium, and the processor may execute the program instructions to implement the functions of the embodiments of the present disclosure described above and/or other desired functions.

The terminal device may include, but is not limited to, a mobile terminal such as a mobile phone, a notebook computer, a digital broadcast receiver, a personal digital assistant (PDA), a tablet computer (portable android device, PAD), a portable media player (PMP), a vehicle-mounted terminal (such as a vehicle navigation terminal), and a wearable electronic device, and a fixed terminal such as a digital TV and a desktop computer. The electronic device shown in Fig. 14 is merely an example, and shall not impose any limitation on the function and scope of use of the embodiments of the present disclosure.

As shown in Fig. 14, the electronic device may include a processing apparatus (e.g., a central processor, a graphics processor, etc.) 1401 that may perform a variety of appropriate actions and processing in accordance with a program stored in a read-only memory (ROM) 1402 or a program loaded from a storage apparatus 1408 into a random access memory (RAM) 1403. The RAM 1403 further stores various programs and data required for the operation of the electronic device. The processing apparatus 1401, the ROM 1402, and the RAM 1403 are connected to each other through a bus 1404. An input/output (I/O) interface 1405 is also connected to the bus 1404.

Generally, the following apparatuses may be connected to the I/O interface 1405: an input apparatus 1406 including, for example, a touch screen, a touchpad, a keyboard, a mouse, a camera, a microphone, an accelerometer, and a gyroscope; an output apparatus 1407 including, for example, a liquid crystal display (LCD), a speaker, and a vibrator; the storage apparatus 1408 including, for example, a tape and a hard disk; and a communication apparatus 1409. The communication apparatus 1409 may allow the electronic device to perform wireless or wired communication with other devices to exchange data. Although Fig. 14 shows the electronic device having various apparatuses, it should be understood that it is not required to implement or have all of the shown apparatuses. It may be an alternative to implement or have more or fewer apparatuses.

In particular, according to an embodiment of the present disclosure, the process described above with reference to the flowchart may be implemented as a computer software program. For example, this embodiment of the present disclosure includes a computer program product, which includes a computer program carried on a computer-readable medium, where the computer program includes program code for performing the method shown in the flowchart. In such an embodiment, the computer program may be downloaded and installed from a network through the communication apparatus 1409, or installed from the storage apparatus 1408, or installed from the ROM 1402. When the computer program is executed by the processing apparatus 1401, the above-mentioned functions defined in the method of the embodiments of the present disclosure are performed.

It should be noted that the above computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. A more specific example of the computer-readable storage medium may include, but is not limited to: an electrical connection having one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may also be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

The above computer-readable medium may be contained in the above electronic device. Alternatively, the computer-readable medium may exist independently, without being assembled into the electronic device.

The above computer-readable medium carries one or more programs that, when executed by the electronic device, cause the electronic device to perform the method shown in the embodiments disclosed above.

The computer program code for performing the operations in the present disclosure may be written in one or more programming languages or a combination thereof, where the programming languages include an object-oriented programming language, such as Java, Smalltalk, or C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user via any kind of network, including a local area network (LAN) or a wide area network (WAN), or may be connected to an external computer (for example, connected via the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The functions described herein above may be performed at least partially by one or more hardware logic components.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium.

An embodiment of the present disclosure provides a computer program product including a computer program that, when executed by a processor, causes the recommendation method according to the first aspect to be implemented.

The foregoing descriptions are merely preferred embodiments of the present disclosure and explanations of the applied technical principles. Those skilled in the art should understand that the scope of disclosure involved in the present disclosure is not limited to the technical solutions formed by specific combinations of the foregoing technical features, and shall also cover other technical solutions formed by any combination of the foregoing technical features or equivalent features thereof without departing from the foregoing concept of disclosure. For example, a technical solution formed by a replacement of the foregoing features with technical features with similar functions disclosed in the present disclosure (but not limited thereto) also falls within the scope of the present disclosure.

In addition, although the various operations are depicted in a specific order, it should not be understood as requiring these operations to be performed in the specific order shown or in a sequential order. Under certain circumstances, multitasking and parallel processing may be advantageous. Similarly, although several specific implementation details are included in the foregoing discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable subcombination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims.

## Claims

1. A recommendation method, comprising:
obtaining a video screenshot image in response to a screenshot operation on a video stream page;
presenting, if the obtained video screenshot image meets a preset condition, the video screenshot image and an object recommendation control on the video stream page, wherein the preset condition is that an object type of a target object in the video screenshot image is a preset type; and
presenting, in response to a first trigger operation for the object recommendation control, a recommendation result page on the video stream page, wherein the recommendation result page comprises attribute information of a recommended object corresponding to the target object.

2. The method according to claim 1, wherein the presenting, in response to a first trigger operation for the object recommendation control, a recommendation result page on the video stream page comprises:
recognizing the video screenshot image in response to the first trigger operation for the object recommendation control, so as to obtain at least one target object;
for each of the at least one target object, searching to determine whether there is an object with a similarity to the target object that is greater than a preset similarity threshold; and
if there is the object, obtaining the attribute information of the recommended object corresponding to each target object, and presenting the recommendation result page on the video stream page and displaying a card carrying the attribute information of the recommended object on the recommendation result page, wherein one target object corresponds to at least one recommended object.

3. The method according to claim 1 or 2, wherein the presenting a recommendation result page on the video stream page comprises:
displaying the recommendation result page in a first preset region of the video stream page;
displaying an object frame presentation region and an object presentation region on the recommendation result page, wherein the object frame presentation region is used for displaying an identifier of the at least one target object, and the object presentation region is used for displaying the attribute information of the recommended object; and
presenting, in the object presentation region, attribute information of a recommended object corresponding to an identifier of a target object that is currently selected and presented, wherein the identifier of the target object that is currently selected and presented is an identifier of a target object that is currently presented at a predefined position in the object frame presentation region.

4. The method according to any one of claims 1 to 3, wherein if an object type of a plurality of target objects in the video screenshot image is the preset type, the method further comprises:
determining, in response to a select operation on an identifier of any one of the target objects in the object frame presentation region, the selected target object as a target object to be presented; and
displaying, in the object presentation region, attribute information of a recommended object corresponding to the target object to be presented.

5. The method according to claim 4, wherein the select operation comprises a second trigger operation or a third trigger operation; and the determining, in response to a select operation on a control of any one of the target objects in the object frame presentation region, the selected target object as a target object to be presented comprises:
determining, in response to the second trigger operation performed in the object frame presentation region, the target object presented at the predefined position as the selected target object; or
determining, in response to the third trigger operation performed on a picture of a target object in the object frame presentation region, the selected target object as the target object to be presented.

6. The method according to any one of claims 1 to 5, wherein a recommended object corresponding to the at least one target object is classified into at least one category, and one category corresponds to one navigation key; and the method further comprises:
displaying a navigation region on the recommendation result page, wherein the navigation region comprises at least one navigation key and at least one first function control, the navigation key is used for providing a function of switching between attribute information of recommended objects corresponding to different categories in the object presentation region, and the first function control is used for providing a user with a function of filtering conditions of the recommended objects.

7. The method according to any one of claims 1 to 5, further comprising:
for each of the at least one target object, searching to determine whether there is the object with the similarity to the target object that is greater than the preset similarity threshold, and displaying a search title on the recommendation result page during searching; and
if the object with the similarity to the target object that is greater than the preset similarity threshold is found, hiding the search title displayed on the recommendation result page; or
if the object with the similarity to the target object that is greater than the preset similarity threshold is not found, displaying prompt information for indicating that no recommended object is found on the recommendation result page, and displaying a navigation identifier on the recommendation result page, wherein the navigation identifier is used for indicating an identifier for providing a user with a service for searching for another object.

8. The method according to any one of claims 1 to 5, further comprising:
enlarging a display region area of the recommendation result page on the video stream page in response to a swipe-up operation performed on the recommendation result page.

9. The method according to any one of claims 1 to 5, further comprising:
displaying, in response to a fourth trigger operation performed on the attribute information of the recommended object presented in the object presentation region, a recommended object details page corresponding to the recommended object.

10. The method according to any one of claims 1 to 5, further comprising:
displaying, in response to a fifth trigger operation performed on the attribute information of the recommended object presented in the object presentation region, a second function control on the attribute information of the recommended object, wherein the second function control comprises at least one functional touch region; and
reporting, in response to a sixth trigger operation performed in a target functional touch region, feedback information corresponding to the target functional touch region.

11. A recommendation apparatus, comprising:
an obtaining module configured to obtain a video screenshot image in response to a screenshot operation on a video stream page;
a first display module configured to present, when the obtained video screenshot image meets a preset condition, the video screenshot image and an object recommendation control on the video stream page, wherein the preset condition is that an object type of a target object in the video screenshot image is a preset type; and
a second display module configured to present, in response to a first trigger operation for the object recommendation control, a recommendation result page on the video stream page, wherein the recommendation result page comprises attribute information of a recommended object corresponding to the target object.

12. An electronic device, comprising: a processor and a memory,
wherein the memory stores computer-executable instructions; and
the processor executes the computer-executable instructions stored in the memory, to cause the processor to perform the recommendation method according to any one of claims 1 to 10.

13. A computer-readable storage medium, storing computer-executable instructions that, when executed by a processor, cause the recommendation method according to any one of claims 1 to 10 to be implemented.

14. A computer program product, comprising a computer program that, when executed by a processor, causes the recommendation method according to any one of claims 1 to 10 to be implemented.

15. A computer program, wherein the computer program, when executed by a processor, causes the recommendation method according to any one of claims 1 to 10 to be implemented.
